# EUROPÄISCHE PATENTSCHRIFT

(11) **EP 2 510 613 B1**
(45) Veröffentlichungstag und Bekanntmachung des Hinweises auf die Patenterteilung: **31.12.2014**
(21) Anmeldenummer: 10766051.6
(22) Anmeldetag: 15.10.2010
(51) Int. Cl.: H02P 29/02, B60L 3/00, B60L 3/04, H02H 7/08, H02H 7/12

(54) **WECHSELRICHTERANORDNUNG ZUM BETREIBEN EINES ELEKTROMOTORS**
INVERTER ASSEMBLY FOR OPERATING AN ELECTRIC MOTOR
AGENCEMENT ONDULEUR POUR LE FONCTIONNEMENT D'UN MOTEUR ÉLECTRIQUE

(30) Priorität: 08.12.2009 DE 102009047616
(43) Veröffentlichungstag der Anmeldung: 17.10.2012
(73) Patentinhaber: Robert Bosch GmbH, 70442 Stuttgart (DE)
(72) Erfinder: SCHWARZ, Albrecht, 71277 Rutesheim (DE); TRUNK, Martin, 71696 Moeglingen (DE); RAICHLE, Daniel, 71735 Eberdingen-Nussdorf (DE)
(86) Internationale Anmeldenummer: PCT/EP2010/065528
(87) Internationale Veröffentlichungsnummer: WO 2011/069725

(56) Entgegenhaltungen:
- DE-A1-102006 003 254
- DE-A1-102007 053 673
- US-A- 5 291 106

## Beschreibung

### Stand der Technik

Die vorliegende Erfindung betrifft das Gebiet der Wechselrichtung zur Versorgung von elektrischen Motoren, insbesondere von elektrischen Motoren in elektrischen Fahrzeugantrieben, mit Wechselspannung.

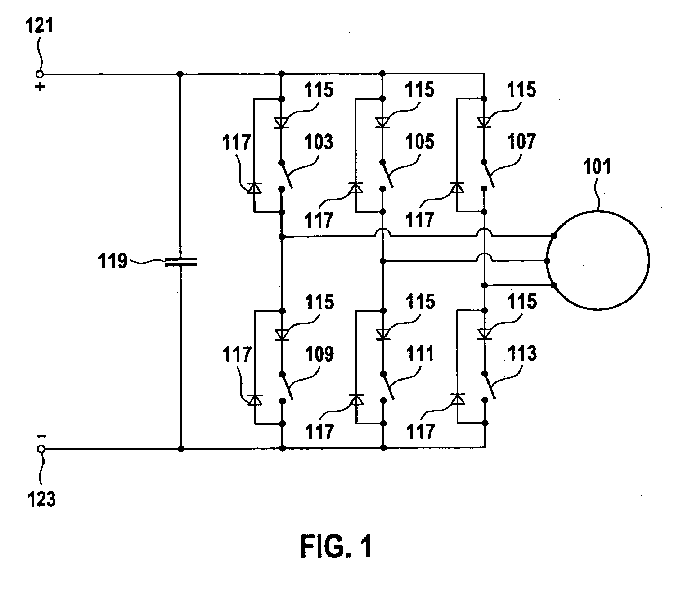

Üblicherweise umfassen elektrische Fahrzeugantriebe permanent-erregte Synchronmaschinen, welche mittels eines Wechselrichters mit Wechselspannung versorgt werden. Fig. 1 zeigt eine Wechselrichteranordnung zum Betreiben eines Elektromotors 101 unter Verwendung einer Wechselrichterschaltung, auch Zwischenkreis genannt, welche als eine B6-Brücke ausgeführt ist. Die Wechselrichterschaltung umfasst obere Halbbrückenzweige mit hochspannungsseitigen Schaltelementen 103, 105 und 107 sowie untere Halbbrückenzweige mit niederspannungsseitigen Schaltelementen 109, 111 und 113. In Reihe zu jedem Schaltelement 105 bis 113 ist jeweils eine Diode 115 angeordnet. Bei einer Realisierung der Schaltelemente unter Verwendung von Transistorschaltern werden die Dioden 115 sowie die Schaltelemente 103 bis 113 üblicherweise durch einen Transistorschalter gemeinsam realisiert. Jeweils parallel zu der jeweiligen Serienschaltung bestehend aus einer Diode 115 und einem jeweiligen Schaltelement 103 bis 113 sind Freilaufdioden 117 angeordnet. Parallel zu der Wechselrichterschaltung ist ferner eine Zwischenkreiskapazität 119 geschaltet, welche im Betrieb parallel zu einer an einem Eingangstor 121, 123 der Wechselrichteranordnung angeschlossenen Konstantspannungsquelle geschaltet ist. Die in Fig. 1 dargestellte Wechselrichteranordnung erzeugt als ein Pulswechselrichter mithilfe der B6-Brückenwechselrichterschaltung eine dreiphasige Wechselspannung zur Ansteuerung des Elektromotors 101.

Wird in dem in Fig. 1 dargestellten System ein Fehler erkannt, so wird der Elektromotor 101 durch Schließen der drei unteren Schalter 109 bis 113 oder der drei oberen Schalter 103 bis 107 in einen aktiven Kurzschluss geschaltet. Dabei verhält sich der Elektromotor 101 elektrisch neutral, d.h. der Elektromotor 101 nimmt weder elektrische Leistung vom Zwischenkreis auf noch gibt dieser elektrische Leistung an den Zwischenkreis ab. Mechanisch erzeugt der Elektromotor 101 ein Kurzschlussmoment an der Welle, das der Verlustleistung in den ohmschen Widerständen der Wicklungen entspricht.

Es sind jedoch unterschiedliche Situationen denkbar, in denen das Schalten des Elektromotors 101 in den aktiven Kurzschluss nicht möglich, technisch aufwändig, nicht sinnvoll oder sogar nicht erlaubt ist. Ein derartiger Fall tritt beispielsweise dann auf, wenn das Kurzschlussmoment groß ist. Ferner kann ein Hardwareeffekt auftreten, der dazu führt, dass ein Schalten in den aktiven Kurzschluss eventuell gar nicht mehr oder nur mit einem hohen technischen Aufwand möglich ist, wenn beispielsweise die Leistungsschalter durchgebrannt sind oder sich nicht mehr schließen lassen, was einen aktiven Kurzschluss nicht zulässt. Ferner kann der Fall eintreten, dass die Leistungsschalter sich nicht mehr öffnen lassen, oder dass die Spannungsversorgung des Pulswechselrichters defekt ist, so dass das Leistungsteil des Pulswechselrichters aus einer Hochspannungsquelle versorgt werden muss. Ferner kann der Fall eintreten, dass der Elektromotor 101 nicht dauerkurzschlussfest ist.

Eine Alternative zum aktiven Kurzschluss im Fehlerfall ist auch ein Freilauf des Elektromotors 101, bei dem alle Leistungsschalter geöffnet werden. Beim Freilauf erzeugt der Elektromotor durch die Induktion eine drehzahlabhängige Spannung. Wird die induzierte Spannung beispielsweise größer als die am Zwischenkreis anliegende Spannung, so wird über die Freilaufdioden 117 Strom in den Zwischenkreis zurückgespeist. Dabei wirkt dann an der Welle des Elektromotors ein negatives Drehmoment, das der Rückspeiseleistung entspricht. Zudem kann durch die Rückspeisung die an den Pulswechselrichter eingangsseitig angeschlossene Hochspannungsbatterie überladen und beschädigt werden.

Zum Beispiel ist aus der DE 10 2007 053 673 A1 eine Vorrichtung zum Betreiben einer elektrischen Maschine eines Kraftfahrzeugs mit einer Leistungselektronik bekannt. Dabei ist vorgesehen, dass ein Gleichstrom-Hochvolt-Zwischenkreis von den die Versorgungsspannung der elektrischen Maschine bildenden Leistungshalbleitern der Leistungselektronik mittels eines Trennelements abkoppelbar ist. Weiterhin beschreibt die DE 10 2006 003 254 A1 ein Verfahren zum Abschalten einer elektrischen Maschine im Falle einer Störung.

### Offenbarung der Erfindung

Die vorliegende Erfindung basiert auf der Erkenntnis, dass ein Elektromotor in den aktiven Freilauf überführt werden kann, ohne einer Rückspeisung von Energie in den Zwischenkreis, wenn die Halbbrücken, insbesondere jedoch deren Freilaufdioden, von einem Eingangstor vollständig entkoppelt werden. Dadurch wird erreicht, dass der Elektromotor im Freilauf elektrisch nicht belastet wird. Ferner kann auf diese Weise ein rückwärtiger Stromfluss unterbunden werden kann.

Gemäß einem Aspekt betrifft die Erfindung eine Wechselrichteranordnung nach Anspruch 1. Die elektrische Spannung kann beispielsweise mittels eines Energiespeichers, beispielsweise einer Hochvoltspannung, eingangsseitig bereitgestellt werden. Die Schaltelemente können beispielsweise als Leistungsschalter ausgeführt sein. Die Brückenwechselrichterschaltung kann ferner als eine B6-Wechselrichterschaltung realisiert oder als eine Pulswechselrichterschaltung realisiert sein. Zum Überführen des Elektromotors in den Freilauf werden bevorzugt alle Schaltelemente der Halbbrückenzweige, d.h. der oberen und/oder der unteren Halbbrückenzweige, geöffnet. Gemäß einer Ausführungsform ist das Entkopplungsschaltelement in Reihe zu einer Freilaufdiode des Halbbrückenzweiges geschaltet, wodurch in vorteilhafter Weise erreicht wird, dass bei Abschaltung des Halbbrückenzweiges kein Strom durch diesen fließen kann.

Gemäß einer Ausführungsform umfasst die Brückenwechselrichterschaltung eine Anzahl von hochspannungsseitigen Schaltern, und dieselbe Anzahl von niederspannungsseitigen Schaltern, wobei parallel zu den hochspannungsseitigen Schaltern und/oder parallel zu den niederspannungsseitigen Schaltern jeweils ein Entkopplungsschaltelement geschaltet ist. Die hochspannungsseitigen Schalter können beispielsweise obere Halbbrücken realisieren, während die niederspannungsseitigen Schalter untere Halbbrücken realisieren können. Die hochspannungsseitigen Schalter werden im Betrieb mit einem positiven Potential beaufschlagt, während die niederspannungsseitigen Schalter mit Masse oder mit einem geringeren Potential beaufschlagt werden. Gemäß einer Ausführungsform ist das Entkopplungsschaltelement zwischen dem Eingangstor und der Brückenwechselrichterschaltung angeordnet, wodurch im Freilauf des Elektromotors ein rückwärtiger Strom zum Eingangstor hin unterbunden wird.

Gemäß einer Ausführungsform umfasst das Entkopplungsschaltelement einen Leistungstransistor, welcher eine Serienschaltung aus einer Diode, welche eine Freilaufdiode sein kann, und einem Schaltelement realisiert. Auf diese Weise kann die Freilaufdiode zusammen mit dem Schaltelement besonders einfach implementiert werden.

Gemäß einer Ausführungsform ist das Entkopplungsschaltelement nur in einem Fehlerfall aktiv, so dass bei fehlerfreiem Betrieb des Elektromotors keine Entkopplung durch das Entkopplungsschaltelement stattfindet.

Gemäß einer Ausführungsform umfasst das Entkopplungsschaltelement einen Schalterzweig mit einem Schalter, insbesondere mit einem Transistorschalter, wobei parallel hierzu eine Diode geschaltet ist. Die parallel geschaltete Diode kann beispielsweise als eine Freilaufdiode ausgebildet sein, was insbesondere bei einer Entkopplung des Eingangstors von der Brückenwechselrichterschaltung vorteilhaft ist. Die Diode kann vorteilhaft auch durch einen Leistungstransistor realisiert werden.

Gemäß einem weiteren Aspekt betrifft die Erfindung eine elektrische Antriebsvorrichtung mit einem Elektromotor und der erfindungsgemäßen Wechselrichteranordnung zum Betreiben des Elektromotors.

Die Erfindung betrifft ferner eine Verwendung nach Anspruch 7.

Weitere Ausführungsbeispiele werden Bezug nehmend auf die beiliegenden Zeichnungen erläutert. Es zeigen:
Fig. 1 eine Wechselrichteranordnung;
Fig. 2 eine Wechselrichteranordnung; und
Fig. 3 eine Wechselrichteranordnung.

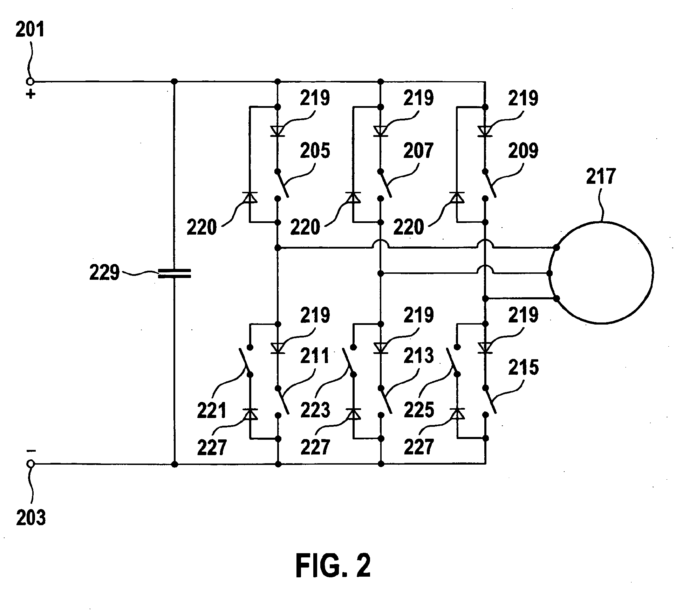

Die in Fig. 2 dargestellte Wechselrichteranordnung umfasst ein Eingangstor mit den Anschlüssen 201 und 203. Dem Eingangstor ist eine Brückenwechselrichterschaltung als ein Zwischenkreis nachgeordnet, welche beispielsweise eine B6-Wechselrichterschaltung ist und hochspannungsseitig obere Halbbrückenzweige mit Schaltelementen 205, 207 und 209 aufweist. In Reihe zu dem jeweiligen hochspannungsseitigen Schaltelement 205 bis 209 ist jeweils ein niederspannungsseitiges Schaltelement 211, 213 und 215 der unteren Halbbrückenzweige angeordnet. Zwischen der jeweiligen Serienschaltung bestehend aus jeweils einem hochspannungsseitigen Schaltelement 205 bis 209 und einem niederspannungsseitigen Schaltelement 211 bis 215 sind von außen zugängliche Anschlüsse angeordnet, welche beispielsweise nach außen ausgeführt und mit einem Elektromotor 217 verbindbar sind. Die Zuleitungen zwischen den Anschlüssen und dem Elektromotor 217 können beispielsweise durch Induktivitäten charakterisiert werden.

Beispielsweise können die parallel zu den Schaltelementen 211, 213 und 215 geschalteten Entkopplungsschaltelemente 221, 223 und 225 auch durch Leistungstransistoren realisiert werden, sodass gleichzeitig die Freilaufdioden 227 implementiert werden können. Sind auch die Schaltelemente 205 bis 215 als Leistungstransistorschalter ausgeführt, so ist in Reihe zu dem jeweiligen Schalter jeweils eine Diode 219 angeordnet. Parallel hierzu ist jeweils eine Freilaufdiode 220 geschaltet.

Die hochspannungsseitigen Schaltelemente 205 bis 209 sind batteriehochspannungsseitig mit einer positiven Batteriespannung beaufschlagbar, während die niederspannungsseitigen Schaltelemente 211 bis 215 batterieniederspannungsseitig mit Masse oder mit einer niedrigeren oder mit einer negativen Spannung beaufschlagbar sind.

Wie in Fig. 2 dargestellt wird durch den Einsatz der Entkopplungsschaltelemente 221 bis 225 in vorteilhafter Weise erreicht, dass der Elektromotor 217 vom Eingangstor getrennt werden kann, so dass keine Rückspeisung in den Zwischenkreis mehr möglich ist. Der Elektromotor 217 erzeugt dabei auch kein Moment an einer Welle, so dass keine Drehmomentbelastung entsteht. Darüber hinaus ermöglicht der Einsatz der erfindungsgemäßen Entkopplungsschaltelemente 221 bis 225 auch den Einsatz günstiger Elektromotoren, weil sie nicht dauerkurzschlussfest sein müssen. Ferner ist die zur Realisierung der in Fig. 2 dargestellten Anordnung zu realisierende Hardwareschaltung einfach, weil keine Fallunterscheidung bei unterschiedlichen Fehlerzuständen in einem Leistungs- bzw. in einem Steuerteil notwendig ist. Die einzige Reaktion im beliebigen Fehlerfall des Elektromotors 217 ist das Öffnen sämtlicher Leistungsschalter. Darüber hinaus kann die Notversorgung der Hardware zur Absicherung im aktiven Kurzschluss entfallen, wodurch die Hardwarekosten weiter reduziert werden können. Ferner wird ein Eigenschutz des Brückenwechselrichters gegen eine verpolte Zwischenkreisspannung ermöglicht, wenn die Schalter 221 bis 225 erst dann geschlossen werden, wenn die Zwischenkreisspannung richtig gepolt anliegt.

Wie vorstehend ausgeführt können alle in Fig. 2 dargestellten Treilaufelemente schaltbar ausgeführt werden, wobei die Steuerung deren SchaltFunktionen durch beispielsweise eine Synchrongleichrichtung durchgeführt werden kann. Die Entkopplungselemente, welche als Leistungsschalter ausgeführt sein können, werden dann geschlossen, wenn der Strom im jeweils gegenüberliegenden Schalter desselben Halbbrückenzweigs abgeschaltet werden soll, was beispielsweise dann eintritt, wenn beim Ausschalten eines hochspannungsseitigen Schalters 205 bis 209 der jeweils darunter liegende niederspannungsseitige Schalter 211 bis 215 desselben Halbbrückenzweigs eingeschaltet wird. Die Verlustleistung kann dabei ferner reduziert werden, wenn die schaltbaren Entko pplungselemente, falls als Leistungstransistorschalter ausgeführt, eine kleinere Durchlassspannung aufweisen als entsprechend vergleichbar stromtragfähige Dioden.

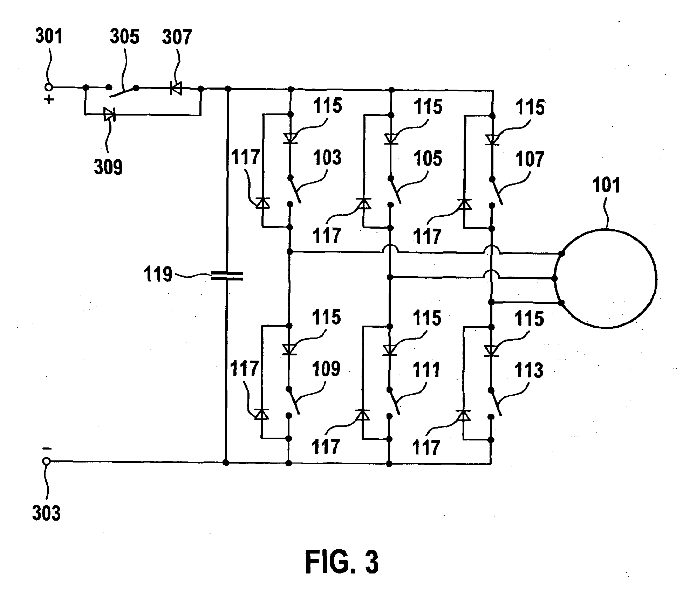

Alternativ oder zusätzlich zu dem in Fig. 2 dargestellten Prinzipist es auch möglich, ein zusätzliches Leistungsmodul umfassend einen Leistungsschalter und eine Freilaufdiode oder zwei antiparallele Leistungsschalter an den Zwischenkreisanschlüssen der Brückenwechselrichterschaltung, beispielsweise an dessen Eingangstor, vorzusehen, wie es beispielsweise in Fig. 3 verdeutlicht ist.

Fig. 3 zeigt eine Wechselrichteranordnung, bei der im Unterschied zu der in Fig. 1 dargestellten Wechselrichteranordnung beispielsweise zwischen einem Anschluss 301 eines Eingangstors der Wechselrichteranordnung, welches einen weiteren Anschluss 303 aufweist, und der dem Eingangstor nachgeschalteten Brückenwechselrichterschaltüng ein Entkopplungselement angeordnet ist. Das Entkopplungselement umfasst ein Schaltelement 305, welches als ein Leistungsschalter ausgeführt werden kann. In diesem Fall ist in Reihe zudem Schaltelement 305 eine Diode 307 angeordnet. Antiparallel hierzu ist eine Diode 309 geschaltet. Die Diode 309 kann beispielsweise durch einen weiteren Leistungstransistor realisiert werden. Durch das Öffnen des Schaltelementes 305 insbesondere in einem Fehlerfall, werden die Schaltelemente der Brückenwechselrichterschaltung und somit auch der Elektromotor 101 von dem Eingangstor 301, 303 entkoppelt. Dabei kann der Leistungsschalter 305 in dem Zwischenkreis kleiner ausgelegt werden als die übrigen Schalter, da vorliegend nur der im Vergleich zu den Phasenströmen kleinere Zwischenkreisstrom fließen kann. Der Zwischenkreiskondensator 119 kann bei direkter Kontaktierung an die Anschlüsse 301 und 303 ebenfalls vom restlichen Zwischenkreis abgetrennt werden, wodurch vorteilhafterweise eine Funktion zur Entladung des Zwischenkreises in der Brückenwechselrichterschaltung entfällt, da der Zwischenkreiskondensator 119 bei offenem Schalter 305 keine Energie mehr in den Zwischenkreis übertragen kann. Falls der Elektromotor 101 in einem Fehlerfall eine größere Spannung erzeugt als sie der Zwischenkreiskondensator 119 vertragen kann, so kann dieser auch vor das Entkopplungsschaltelement mit dem Abschaltelement 305 beispielsweise direkt mit dem positiven Anschluss 301 verbunden werden. Dasselbe gilt, wenn das Entkopplungselement mit dem Schaltelement 305 zwischen dem negativen Anschluss 303 und der Brückenwechselrichterschaltung in der niederspannungsseitigen Leitung eingebaut wird.

Die Wechselrichteranordnung ist nicht notwendigerweise auf den in den Figuren lediglich beispielhaft dargestellten, dreiphasigen Fall beschränkt. Vielmehr kann die Anzahl der Brückenzweige der Wechselrichteranordnung, welche die Gesamtanzahl der Phasen festlegt, beliebig sein. Die Wechselrichteranordnung kann beispielhaft nur zwei Brückenzweige mit jeweils zwei hintereinander geschalteten Schaltelementen aufweisen, welche zur Versorgung eines einfachen Elektromotors mit elektrischer Energie vorgesehen sind. Die Wechselrichteranordnung kann beispielhaft auch sechs oder neun Brückenzweige aufweisen, welche zur Versorgung eines entsprechend mehrphasigen Elektromotors mit elektrischer Energie vorgesehen sind.

## Patentansprüche

1. Wechselrichteranordnung zum Betreiben eines Elektromotors, mit folgenden Merkmalen:
• einem Eingangstor (201, 203) zum Bereitstellen einer elektrischen Spannung;
• einer dem Eingangstor (201, 203) nachgeschalteten Brückenwechselrichterschaltung zur Erzeugung einer elektrischen Wechselspannung für den Elektromotor auf der Basis der elektrischen Spannung, wobei die Brückenwechselrichterschaltung zumindest einen Halbbrückenzweig (219, 211, 227; 219, 213, 227; 219, 215, 227) mit Schaltelementen (211, 213, 215) aufweist und ausgebildet ist, zur Überführung des Elektromotors in einen Freilaufzustand die Schaltelemente (211, 213, 215) zu öffnen; und
• einem Entkopplungsschaltelement (221-225; 305), welches ausgebildet ist, den zumindest einen Halbbrückenzweig (219, 211, 227; 219, 213, 227; 219, 215, 227) in dem Freilaufzustand des Elektromotors von dem Eingangstor (201, 203) zu trennen, um eine Rückwirkung des freilaufenden Elektromotors auf das Eingangstor (201, 203) zu unterbinden,
**dadurch gekennzeichnet, dass** das Entkopplungsschaltelement (221-225) in Reihe zu einer Freilaufdiode (227) des Halbbrückenzweiges (219, 211, 227; 219, 213, 227; 219, 215, 227) geschaltet ist und die Brückenwechselrichterschaltung eine Anzahl von hochspannungsseitigen Schaltelementen (205-209) und dieselbe Anzahl von niederspannungsseitigen Schaltelementen (211-215) aufweist, wobei parallel zu den hochspannungsseitigen Schaltelementen (205-209) und/oder parallel zu den niederspannungsseitigen Schaltelementen (211-215) jeweils ein Entkopplungsschaltelement (221-225) angeordnet ist.

2. Wechselrichteranordnung gemäß Anspruch 1, wobei das Entkopplungsschaltelement (221-225) zusammen mit der Diode (227) als ein Leistungstransistor realisiert ist.

3. Wechselrichteranordnung gemäß einem der vorstehenden Ansprüche, wobei das Entkopplungsschaltelement (305) zwischen dem Eingangstor (301, 303) und der Brückenwechselrichterschaltung angeordnet ist und einen Schalter aufweist.

4. Wechselrichteranordnung gemäß einem der vorstehenden Ansprüche, wobei das Entkopplungsschaltelement (305) einen Schalterzweig mit einem Schalter (305), insbesondere einem Transistorschalter, und einer parallel zu dem Schalterzweig geschalteten Diode (309) aufweist.

5. Wechselrichteranordnung gemäß Anspruch 4, wobei die Diode (309) durch einen Leistungstransistor realisiert ist.

6. Elektrische Antriebsvorrichtung, mit:
einem Elektromotor; und
der Wechselrichteranordnung gemäß einem der Ansprüche 1 bis 5 zur Versorgung des Elektromotors mit Wechselspannung.

7. Verwendung einer Wechselrichteranordnung gemäß einem der Ansprüche 1 bis 5 zum Betreiben eines Elektromotors, wobei die Wechselrichteranordnung die folgenden Merkmale aufweist:
• ein Eingangstor (201,203) zum Bereitstellen einer elektrischen Spannung;
• eine dem Eingangstor (201,203) nachgeschaltete Brückenwechselrichterschaltung zum Erzeugen einer elektrischen Wechselspannung für den Elektromotor auf der Basis der elektrischen Spannung, wobei die Brückenwechselrichterschaltung zumindest einen Halbbrückenzweig (219,211,227;219,213,227;219,215,227) mit Schaltelementen (211,213,215) aufweist, die zum Überführen des Elektromotors in einen Freilaufzustand geöffnet werden; und
• ein Entkopplungsschaltelement (221-225;305), das den zumindest einen Halbbrückenzweig (219,211,227;219,213,227;219,215,227) in dem Freilaufzustand des Elektromotors von dem Eingangstor (201,203) trennt, um eine Rückwirkung des freilaufenden Elektromotors auf das Eingangstor (201,203) zu unterbinden,
**dadurch gekennzeichnet, dass** das Entkopplungsschaltelement (221-225) in Reihe zu einer Freilaufdiode (227) des Halbbrückenzweiges (219, 211, 227; 219, 213, 227; 219, 215, 227) geschaltet ist und die Brückenwechselrichterschaltung eine Anzahl von hochspannungsseitigen Schaltelementen (205-209) und dieselbe Anzahl von niederspannungsseitigen Schaltelementen (211-215) aufweist, wobei parallel zu den hochspannungsseitigen Schaltelementen (205-209) und/oder parallel zu den niederspannungsseitigen Schaltelementen (211-215) jeweils ein Entkopplungsschaltelement (221-225) angeordnet ist.

8. Verwendung nach Anspruch 7, wobei der Halbbrückenzweig (219,211,227;219,213,227;219,215,227) ausschließlich im Falle eines fehlerhaften Betriebs des Elektromotors mittels des Entkopplungsschaltelements (221-225;305) von dem Eingangstor (201,203) getrennt wird.

## Claims

1. Inverter assembly for operating an electric motor, comprising the following features:
• an input port (201, 203) for providing an electric voltage;
• a bridge inverter circuit connected downstream of the input port (201, 203) for generating an AC electric voltage for the electric motor on the basis of the electric voltage, wherein the bridge inverter circuit has at least one half-bridge branch (219, 211, 227; 219, 213, 227; 219, 215, 227) comprising switching elements (211, 213, 215) and is designed to open the switching elements (211, 213, 215) in order to transfer the electric motor to a freewheeling state; and
• a decoupling switching element (221-225; 305), which is designed to disconnect at least one half-bridge branch (219, 211, 227; 219, 213, 227; 219, 215, 227) from the input port (201, 203) in the freewheeling state of the electric motor in order to suppress a reaction of the freewheeling electric motor on the input port (201, 203),
**characterized in that** the decoupling switching element (221-225) is connected in series with a freewheeling diode (227) of the half-bridge branch (219, 211, 227; 219, 213, 227; 219, 215, 227), and the bridge inverter circuit has a number of switching elements (205-209) on the high-voltage side and the same number of switching elements (211-215) on the low-voltage side, wherein in each case one decoupling switching element (221-225) is arranged in parallel with the switching elements (205-209) on the high-voltage side and/or in parallel with the switching elements (211-215) on the low-voltage side.

2. Inverter assembly according to Claim 1, wherein the decoupling switching element (221-225) together with the diode (227) is implemented as a power transistor.

3. Inverter assembly according to one of the preceding claims, wherein the decoupling switching element (305) is arranged between the input port (301, 303) and the bridge inverter circuit and has a switch.

4. Inverter assembly according to one of the preceding claims, wherein the decoupling switching element (305) has a switch branch comprising a switch (305), in particular a transistor switch, and a diode (309) connected in parallel with the switch branch.

5. Inverter assembly according to Claim 4, wherein the diode (309) is implemented by a power transistor.

6. Electric drive apparatus comprising:
an electric motor; and
the inverter assembly according to one of Claims 1 to 5 for supplying AC voltage to the electric motor.

7. Use of an inverter assembly according to one of Claims 1 to 5 for operating an electric motor, wherein the inverter assembly has the following features:
• an input port (201, 203) for providing an electric voltage;
• a bridge inverter circuit connected downstream of the input port (201, 203) for generating an AC electric voltage for the electric motor on the basis of the electric voltage, wherein the bridge inverter circuit has at least one half-bridge branch (219, 211, 227; 219, 213, 227; 219, 215, 227) comprising switching elements (211, 213, 215), which are opened in order to transfer the electric motor to a freewheeling state; and
• a decoupling switching element (221-225; 305), which disconnects the at least one half-bridge branch (219, 211, 227; 219, 213, 227; 219, 215, 227) from the input port (201, 203) in the freewheeling state of the electric motor in order to suppress a reaction of the freewheeling electric motor on the input port (201, 203),
**characterized in that** the decoupling switching element (221-225) is connected in series with a freewheeling diode (227) of the half-bridge branch (219, 211, 227; 219, 213, 227; 219, 215, 227), and the bridge inverter circuit has a number of switching elements (205-209) on the high-voltage side and the same number of switching elements (211-215) on the low-voltage side, wherein in each case one decoupling switching element (221-225) is arranged in parallel with the switching elements (205-209) on the high-voltage side and/or in parallel with the switching elements (211-215) on the low-voltage side.

8. Use according to Claim 7, wherein the half-bridge branch (219, 211, 227; 219, 213, 227; 219, 215, 227) is disconnected from the input port (201, 203) by means of the decoupling switching element (221-225; 305) exclusively in the case of faulty operation of the electric motor.

## Revendications

1. Arrangement onduleur servant à faire fonctionner un moteur électrique, comprenant les caractéristiques suivantes :
* une porte d'entrée (201, 203) destinée à la délivrance d'une tension électrique ;
* un circuit onduleur en pont branché en aval de la porte d'entrée (201, 203) pour générer une tension électrique alternative pour le moteur électrique en se basant sur la tension électrique, le circuit onduleur en pont possédant au moins une branche de demi-pont (219, 211, 227 ; 219, 213, 227 ; 219, 215, 227) avec des éléments de commutation (211, 213, 215) et étant configuré pour ouvrir les éléments de commutation (211, 213, 215) en vue d'amener le moteur électrique dans un état de roue libre ; et
* un élément de commutation de découplage (221-225 ; 305), lequel est configuré pour déconnecter l'au moins une branche de demi-pont (219, 211, 227 ; 219, 213, 227 ; 219, 215, 227) de la porte d'entrée (201, 203) dans l'état de roue libre du moteur électrique afin d'empêcher une rétroaction du moteur électrique en roue libre sur la porte d'entrée (201, 203),
**caractérisé en ce que** l'élément de commutation de découplage (221-225) est branché en série avec une diode de roue libre (227) de la branche de demi-pont (219, 211, 227 ; 219, 213, 227 ; 219, 215, 227) et le circuit onduleur en pont présente un certain nombre d'éléments de commutation côté haute tension (205-209) et le même nombre d'éléments de commutation côté basse tension (211-215), un élément de commutation de découplage (221-225) étant respectivement disposé en parallèle avec les éléments de commutation côté haute tension (205-209) et/ou en parallèle avec les éléments de commutation côté basse tension (211-215).

2. Arrangement onduleur selon la revendication 1, avec lequel l'élément de commutation de découplage (221-225) est réalisé conjointement avec la diode (227) sous la forme d'un transistor de puissance.

3. Arrangement onduleur selon l'une des revendications précédentes, avec lequel l'élément de commutation de découplage (305) est disposé entre la porte d'entrée (301, 303) et le circuit onduleur en pont et présente un commutateur.

4. Arrangement onduleur selon l'une des revendications précédentes, avec lequel l'élément de commutation de découplage (305) présente une branche de commutateur comprenant un commutateur (305), notamment un commutateur à transistor, et une diode (309) branchée en parallèle avec la branche de commutateur.

5. Arrangement onduleur selon la revendication 4, avec lequel la diode (309) est réalisée par un transistor de puissance.

6. Dispositif d'entraînement électrique comprenant :
un moteur électrique ; et
l'arrangement onduleur selon l'une des revendications 1 à 5 pour l'alimentation du moteur électrique en tension alternative.

7. Utilisation d'un arrangement onduleur selon l'une des revendications 1 à 5 pour faire fonctionner un moteur électrique, l'arrangement onduleur présentant les caractéristiques suivantes :
* une porte d'entrée (201, 203) destinée à la délivrance d'une tension électrique ;
* un circuit onduleur en pont branché en aval de la porte d'entrée (201, 203) pour générer une tension électrique alternative pour le moteur électrique en se basant sur la tension électrique, le circuit onduleur en pont possédant au moins une branche de demi-pont (219, 211, 227 ; 219, 213, 227 ; 219, 215, 227) avec des éléments de commutation (211, 213, 215) qui peuvent être ouverts en vue d'amener le moteur électrique dans un état de roue libre ; et
* un élément de commutation de découplage (221-225 ; 305), lequel déconnecte l'au moins une branche de demi-pont (219, 211, 227 ; 219, 213, 227 ; 219, 215, 227) de la porte d'entrée (201, 203) dans l'état de roue libre du moteur électrique afin d'empêcher une rétroaction du moteur électrique en roue libre sur la porte d'entrée (201, 203),
**caractérisée en ce que** l'élément de commutation de découplage (221-225) est branché en série avec une diode de roue libre (227) de la branche de demi-pont (219, 211, 227 ; 219, 213, 227 ; 219, 215, 227) et le circuit onduleur en pont présente un certain nombre d'éléments de commutation côté haute tension (205-209) et le même nombre d'éléments de commutation côté basse tension (211-215), un élément de commutation de découplage (221-225) étant respectivement disposé en parallèle avec les éléments de commutation côté haute tension (205-209) et/ou en parallèle avec les éléments de commutation côté basse tension (211-215).

8. Utilisation selon la revendication 7, avec laquelle la branche de demi-pont (219, 211, 227 ; 219, 213, 227 ; 219, 215, 227) n'est déconnectée de la porte d'entrée (201, 203) au moyen de l'élément de commutation de découplage (221-225 ; 305) que dans le cas d'un fonctionnement défectueux du moteur électrique.
